# EUROPEAN PATENT SPECIFICATION

(11) **EP 2 085 067 B1**
(45) Date of publication and mention of the grant of the patent: **16.03.2011**
(21) Application number: 09445003.8
(22) Date of filing: 28.01.2009
(51) Int. Cl.: A61H 3/04, B62B 9/08

(54) **Rollator brake**
Gehwagenbremse
Frein d'ambulateur

(30) Priority: 04.02.2008 SE 0800260
(43) Date of publication of application: 05.08.2009
(73) Proprietor: Liko Research & Development AB, 975 92 Luleå (SE)
(72) Inventor: Liljedahl, Gunnar, 97593 Luleå (SE)
(74) Representative: Janson, Ronny

(56) References cited:
- DE-U1- 9 217 212
- NL-C2- 1 020 591
- US-B1- 6 378 663
- US-B1- 6 817 451

## Description

### Field of the Invention

The invention relates to a rollator brake according to the preamble to claim 1.

### Background of the Invention

It is known to provide rollators or wheeled walkers with braking devices, both in the form of a service brake and a parking brake. Said brakes usually act on the wheels in such a way that, when it is desired to brake the rollator, irrespective of whether it is activation of the service brake or the parking brake, the braking member of the braking device is pressed against the surface of the tyre that is intended to contact the ground.

A disadvantage of this type of braking is that, if the pressing of the braking member against the tyre surface is not sufficiently strong, the braking effect becomes poor and the tyre may start to rotate, and thereby the rollator is moved.

An additional disadvantage is that the braking effect may be influenced by outer conditions such as rain and snow.

The document NL-C-1020591, discloses a Pram with a Service brake and parking brake similar to the invention

### Summary of the Invention

The object of the invention is to eliminate or minimize the disadvantages mentioned above.

According to the invention, this is provided by means of a rollator brake having a combined service and parking brake, which brake comprises a pivoting brake handle arranged at one end of a handled vertically adjustable upright and operatively connected with a braking device, which brake handle, when the same is raised toward the handle, is adapted to engage a service-brake position and, when the same is pushed downward away from the handle, is adapted to engage a parking-brake position, and the characteristic of the invention is that a gear rim is arranged at either the hub of a braked wheel or a shaft fixedly connected with the braked wheel, that a braking member of the braking device is spring-biasedly arranged toward the parking-brake position in such a way that, in the parking-brake position, the braking member is adapted to penetrate between the teeth of the gear rim for locking of the wheel, and that, in the service-brake position, the braking member is adapted to abut against the inside of a rim of the wheel for braking the same.

### Brief Description of the Drawings

The invention is described in more detail below, reference being made to the accompanying drawing that shows a nonlimiting embodiment of a rollator brake according to the invention, and in which
Fig. 1 is a schematic perspective view of a frame side member having a braked wheel and a vertically adjustable upright,
Figs. 2a-c are enlarged detailed views of the rollator brake according to the invention shown inside a ring in Fig.1 in the service-brake, neutral and parking-brake position, respectively,
Fig. 3 is an enlarged detailed view of a return-wheel mechanism shown inside a ring in Fig. 1 for the actuation of the rollator brake, and
Fig.4 is a side view of the brake handle in the parking-brake position with the manoeuvring handle of the rollator being schematically shown.

### Brief description of the preferred embodiment

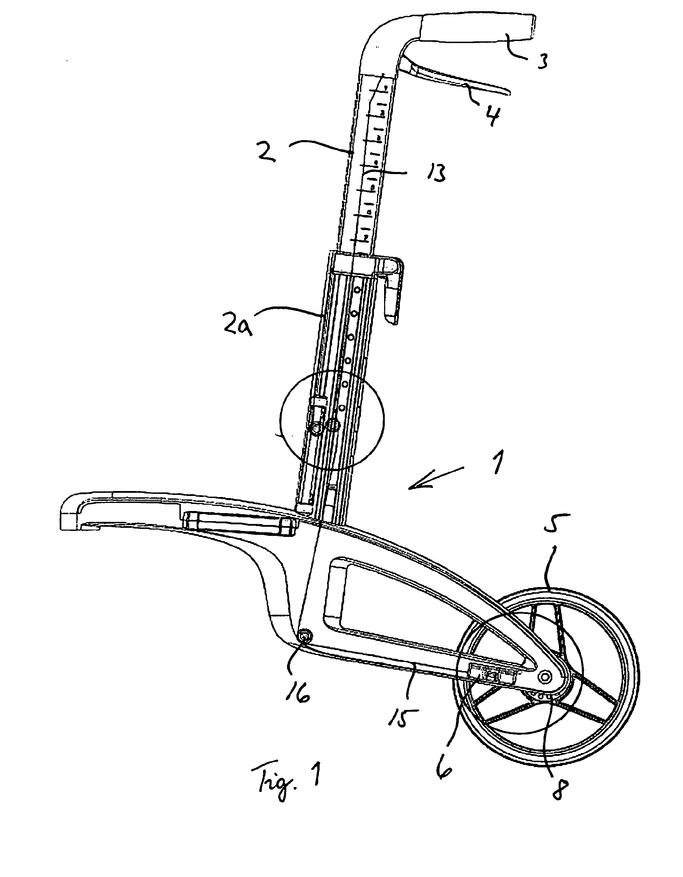

Fig. 1 shows a frame side member 1 of a rollator (not shown), which frame side member 1 is provided with a vertically adjustable upright 2 and a fixed upright 2a. A handle 3 for the manoeuvring of the rollator is arranged at an upper end of the upright 2. Adjacent to the attachment of the handle 3 to the upright 2, there is a brake handle 4 pivotably attached.

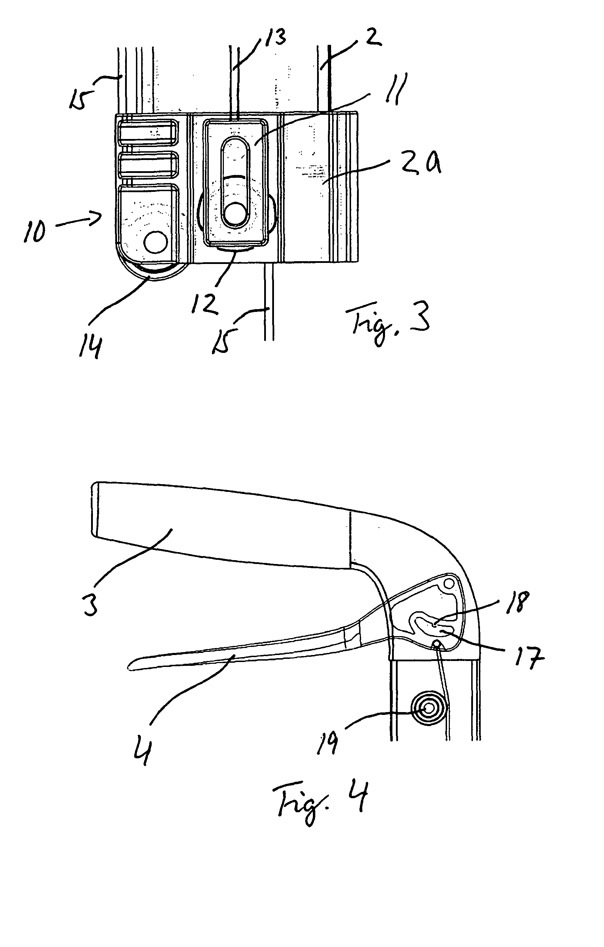

In order to simplify Fig. 1, there is shown only a rear wheel 5 provided with a braking device and in a known way rotatably attached to the frame side member 1 of a rollator (not shown). The vertically adjustable upright 2 and the fixed upright 2a are shown sectioned to reveal wires 13, 15 arranged in the uprights and a return-wheel mechanism 10, the function of which will be described below, reference being made to Fig. 3.

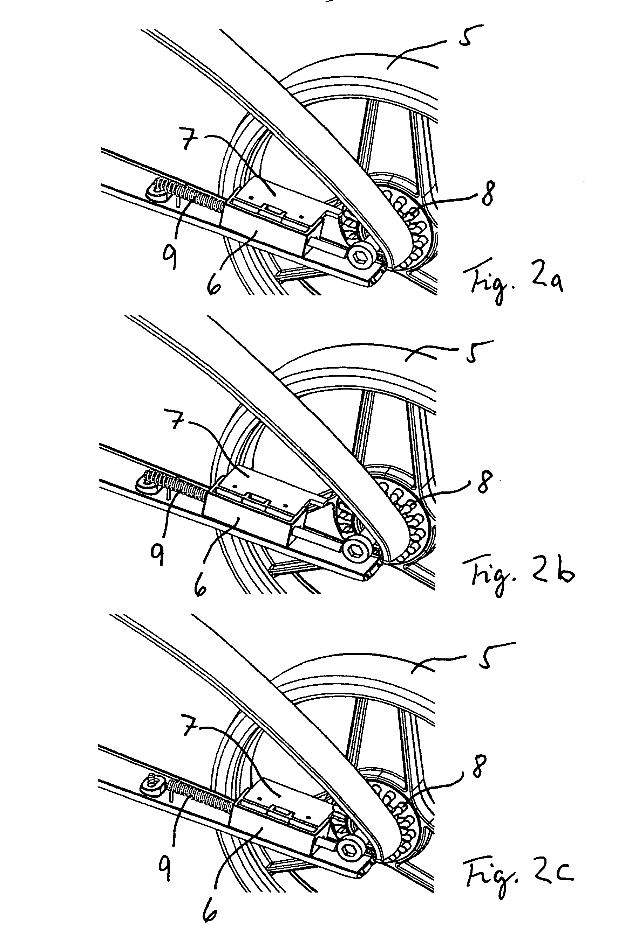

Figs. 2a-c are enlarged views of the area of the wheel 5 inside the ring shown in Fig. 1 and show a braking device 6 mounted to the frame side member 1 and inside the outer circumference of the wheel 5. The braking device 6 comprises a spring-biased braking member 7, which is adapted to assume three positions, namely the service-brake position (Fig.2a), neutral position (Fig. 2b), and parking-brake position (Fig. 2c). The braking device 6 is adjustably arranged at the frame side member 1 for the control of the brake operation of the braking member 7.

As is seen in Figs. 2a-c, the rear wheel 5 is provided with a gear rim 8 or some similar member having the same function, preferably arranged as an integrated part of the wheel 5 at the hub thereof. The gear rim 8 may also be arranged at a shaft (not shown) that is fixedly connected with the wheel 5. The braking member 7 is preferably spring biased by a spring 9 toward the parking-brake position (Fig. 2c).

In Fig. 3, there is shown enlarged a detail in Fig. 1 of the return-wheel mechanism 10 for the manoeuvring of the braking device 6 by means of the brake handle 4. The return-wheel mechanism 10 comprises, on one hand, a yoke 11 pivotably supporting a first return wheel 12, to which yoke one end of a brake-handle wire 13 is attached and the other end of which is attached to the brake handle 4, and on the other hand a second return wheel 14 pivotably supported by the vertically adjustable upright 2. A first end of a brake wire 15 is adjustably attached to the braking device 6 and a second end is attached to the upper end of the fixed upright 2a. The brake wire 15 is threaded, as seen from the second end, under the second return wheel 14, over the first return wheel 12 via a deflection roller 16 arranged at a lower portion of the frame side member 1, in such a way that it, after the deflection roller, extends principally parallel to a stay of the frame side member 1, to the braking device 6. By said return-wheel mechanism, the vertically adjustable upright 2 can be raised and lowered without the length of the brake wire 15 having to be adjusted and thereby the brake operation of the braking member 7, both in the service-brake position and in the parking-brake position.

The parking-brake position is engaged by pressing the brake handle 4 downward, wherein the spring-biased braking member 7 becomes engaged with the teeth of the gear rim 8. The braking member 7 is preferably formed as a plate or disc, i.e., with a relatively small thickness, in such a way that at least a part of one end of the braking member penetrates between the teeth of the gear rim 8, the wheel 5 efficiently being locked against rotation.

The brake handle 4 shown in Fig. 4 can assume two stable end positions, a first position that corresponds to a combined service-brake and neutral position, as well as a second position that corresponds to the parking-brake position. The neutral position is automatically set thanks to a curved notch 17 formed in the brake handle, at one surface of which notch a projection 18 is arranged. The projection 18 is adapted to co-operate with a spring-biased spindle (not shown) in such a way that the brake handle 4 is arranged to be pulled downward via the two wires 13, 15 by the spring-biased braking member 7, and thereby the projection 18 will make contact with the spindle. When the brake handle is forced downward by hand, the projection "jumps" over the spring-biased spindle, and the braking device 6 assumes the parking-brake position, i.e., one end of the braking member penetrates between the teeth of the gear rim 8. In order to attain the service-brake position from the parking-brake position, both the spring bias of the braking member 7 and the spring bias of the spring-biased spindle have to be overcome. In the combined service-brake and neutral position, only the spring bias of the braking member needs to be overcome in order to obtain braking effect. A deflection roller 19 is arranged in the upright 2 in the vicinity of the attachment of the brake-handle wire 13 to the brake handle 4 in order to provide maximum extension/shortening of the brake-handle wire when the brake handle 4 is manoeuvred.

## Claims

1. Rollator brake having a combined service and parking brake, which brake comprises a pivoting brake handle (4) arranged at one end of a handled upright (2) and operatively connected with a braking device (6), which brake handle (4), when the same is raised toward the handle, is adapted to engage a service-brake position and, when the same is pushed downward away from the handle, is adapted to engage a parking-brake position, **characterized in that** a gear rim (8) is arranged at either the hub of a braked wheel (5) or a shaft fixedly connected with the braked wheel, that a braking member (7) of the braking device (6) is spring-biasedly arranged toward the parking-brake position in such a way that, in the parking-brake position, the braking member (7) is adapted to penetrate between the teeth of the gear rim (8) for locking of the wheel (5), and that, in the service-brake position, the braking member (7) is adapted to abut against the inside of a rim of the wheel (5) for braking the same.

2. Rollator brake according to claim 1, **characterized in that** the braking member (7) is formed like a disc at least at the end thereof adapted to penetrate between the teeth of the gear rim (8).

3. Rollator brake according to claim 1 or 2, **characterized in that** the brake handle (4) is provided with a curved notch (17), one surface of which has a projection (18) adapted to co-operate with a spring-biased spindle, in such a way that the brake handle (4) can assume two fixed positions, a parking-brake position and a service-brake position.

4. Rollator brake according to claim 3, **characterized in that** both the spring bias of the braking member (7) and the spring bias of the spring-biased spindle have to be overcome in order to attain the service-brake position from the parking-brake position.

5. Rollator brake according to any one of claims 1-4, **characterized in that** the upright (2) is vertically adjustably arranged in an upright (2a) fixedly connected to a frame side member (1).

6. Rollator brake according to claim 5, **characterized in that** the brake handle (4) is operatively connected with the braking device (6) by means of wires (13,15) via a return-wheel mechanism (10) arranged in the upright (2a), which return-wheel mechanism comprises a yoke (11) pivotably supporting a first return wheel (12), and a second return wheel (14) pivotably supported by the vertically adjustable upright (2).

7. Rollator brake according to claim 6, **characterized in that** one end of a brake-handle wire (13) is attached to the yoke (11) and the other end is attached to the brake handle (4), that one end of a brake wire (15) is fixedly connected to the fixed upright (2a) and the other end is adjustably attached to the braking device (6), and that the brake wire (15) is threaded via the first and the second return wheel (12,14), whereby the vertically adjustable upright (2) can be adjusted vertically without the length of the wires (13,15) needing to be adjusted.

## Patentansprüche

1. Gehwagenbremse mit einer kombinierten Betriebs- und Parkbremse, welche einen schwenkbaren Bremshebel (4) aufweist, der an einem Ende eines Ständers (2) mit Griff angeordnet ist und funktional mit einer Bremsvorrichtung (6) verbunden ist, wobei der Bremshebel (4), wenn derselbe in Richtung des Griffs angehoben ist, dazu eingerichtet ist, eine Betriebs-Bremsposition einzunehmen, und, wenn derselbe abwärts von dem Griff weggedrückt wird, dazu eingerichtet ist, eine Park-Bremsposition einzunehmen, **dadurch gekennzeichnet, dass** ein Zahnkranz (8) entweder an der Nabe eines gebremsten Rads (5) oder an einer Achse, die fest mit dem gebremsten Rad verbunden ist, angeordnet ist, so dass ein Bremselement (7) der Bremsvorrichtung (6) in Richtung der Park-Bremsposition derart durch eine Feder vorgespannt angeordnet ist, dass in der Park-Bremsposition das Bremselement (7) dazu eingerichtet ist, zwischen die Zähne des Zahnkranzes (8) zu greifen, um das Rad (5) zu arretieren, und dass in der Betriebs-Bremsposition das Bremselement (7) dazu eingerichtet ist, gegen die Innenseite einer Felge des Rads (5) anzustoßen, um dasselbe zu bremsen.

2. Gehwagenbremse nach Anspruch 1, **dadurch gekennzeichnet, dass** das Bremselement (7) wie eine Scheibe ausgebildet ist, die zumindest am Ende davon dazu ausgestaltet ist, zwischen die Zähne des Zahnkranzes (8) zu greifen.

3. Gehwagenbremse nach Anspruch 1 oder 2 **dadurch gekennzeichnet, dass** der Bremshebel (4) mit einer gekrümmten Aussparung (17) ausgestattet ist, von der eine Oberfläche einen Vorsprung (18) aufweist, der dazu ausgestaltet ist, mit einer durch eine Feder vorgespannten Spindel zusammenzuarbeiten, und zwar derart, dass der Bremshebel (4) zwei feste Positionen einnehmen kann, nämlich eine Park-Bremsposition und eine Betriebs-Bremsposition.

4. Gehwagenbremse nach Anspruch 3, **dadurch gekennzeichnet, dass** sowohl die Federvorspannung des Bremselements (7) als auch die Federvorspannung der durch eine Feder vorgespannten Spindel überwunden werden müssen, um die Betriebs-Parkposition aus der Park-Bremsposition heraus einzunehmen.

5. Gehwagenbremse nach einem der Ansprüche 1 bis 4, **dadurch gekennzeichnet, dass** der Ständer (2) vertikal einstellbar in einem Ständer (2a) angeordnet ist, welcher fest mit einem Rahmenseitenelement (1) verbunden ist.

6. Gehwagenbremse nach Anspruch 5, **dadurch gekennzeichnet, dass** der Bremshebel (4) funktional mit der Bremsvorrichtung (6) verbunden ist, und zwar mittels Drähten (13, 15) über einen Umlenkradmechanismus (10), der in dem Ständer (2a) angeordnet ist, wobei der Umlenkradmechanismus ein Joch (11), das ein erstes Umlenkrad (12) schwenkbar trägt, aufweist, als auch ein zweites Umlenkrad (14), das schwenkbar von dem vertikal einstellbaren Ständer (2) getragen wird.

7. Rollwagenbremse nach Anspruch 6, **dadurch gekennzeichnet, dass** ein Ende eines Bremshebeldrahtes (13) an dem Joch (11) befestigt ist und das andere Ende an dem Bremshebel (4) befestigt ist, dass ein Ende eines Bremsdrahts (15) fest mit dem festen Ständer (2a) verbunden ist und das andere Ende einstellbar an der Bremsvorrichtung 6 befestigt ist und dass der Bremsdraht (15) über das erste und das zweite Umlenkrad (12, 14) gezogen ist, wodurch der vertikal einstellbare Ständer (2) vertikal eingestellt werden kann, ohne dass die Länge der Drähte (13, 15) eingestellt zu werden braucht.

## Revendications

1. Frein d'ambulateur ayant un frein de service et de parking combiné, ledit frein comprenant une poignée de freinage pivotante (4) disposée à une extrémité d'un montant manipulé (2) et opérationnellement reliée à un dispositif de freinage (6), ladite poignée de freinage (4), quand celui-ci est levé vers la poignée, étant adaptée pour mettre en prise une position de frein de service et, quand celui-ci est poussé vers le bas loin de la poignée, étant adaptée pour mettre en prise une position de frein de parking, **caractérisé en ce qu'**une couronne d'embrayage (8) est disposée soit sur le moyeu d'une roue freinée (5) ou sur un arbre raccordé fixement à la roue freinée, **en ce qu'**un élément de freinage (7) du dispositif de freinage (6) est disposé de manière biaisée par un ressort vers la position de frein de parking, de sorte que, dans la position de frein de parking, l'élément de freinage (7) soit adapté pour pénétrer entre les dents de la couronne d'embrayage (8), afin de bloquer la roue (5) et que, dans la position du frein de service, l'élément de freinage (7) soit adapté pour venir en butée contre l'intérieur d'une jante d'une roue (5) pour la freiner.

2. Frein d'ambulateur selon la revendication 1, **caractérisé en ce que** l'élément de freinage (7) est formé comme un disque au moins à l'extrémité correspondante adaptée pour pénétrer entre les dents de la couronne (8).

3. Frein d'ambulateur selon la revendication 1 ou 2, **caractérisé en ce que** la poignée de frein (4) est dotée d'une encoche incurvée (17), dont une surface a une saillie (18) adaptée pour coopérer avec une broche biaisée par ressort, de sorte que la poignée de frein (4) puisse prendre deux positions fixes, une position de frein de parking et une position de frein de service.

4. Frein d'ambulateur selon la revendication 3, **caractérisé en ce que** le biais par ressort de l'élément de freinage (7) et le biais par ressort de la broche biaisée par ressort doivent être surmontées, afin d'atteindre la position du frein de service depuis la position du frein de parking.

5. Frein d'ambulateur selon l'une quelconque des revendications 1 à 4, **caractérisé en ce que** le montant (2) est disposé verticalement de manière ajustable dans un montant (2a) raccordé de manière fixe à un élément latéral du cadre (1).

6. Frein d'ambulateur selon la revendication 5, **caractérisé en ce que** la poignée de frein (4) est opérationnellement connectée au dispositif de freinage (6) au moyen de fils (13, 15), par le biais d'un mécanisme de roue de retour (10) disposé dans le montant (2a), ledit mécanisme de roue de retour comprenant un étrier (11) supportant en pivotement une première roue de retour (12) et une seconde roue de retour (14) supportée en pivotement par le montant ajustable verticalement (2).

7. Frein d'ambulateur selon la revendication 6 **caractérisé en ce qu'**une extrémité d'un fil de poignée de frein (13) est fixée à l'étrier (11) et l'autre extrémité est fixée à la poignée de frein (4), **en ce qu'**une extrémité d'un fil de frein (15) est raccordée de manière fixe au montant fixe (2a) et l'autre extrémité est fixée de manière ajustable au dispositif de freinage (6), et **en ce que** le fil de frein (15) est fileté par le biais de la première et de la seconde roue de retour (12, 14), moyennant quoi le montant ajustable verticalement (2) peut être ajusté verticalement, sans qu'il soit nécessaire d'ajuster la longueur des fils (13, 15).
